# EUROPÄISCHE PATENTANMELDUNG

(11) **EP 1 114 763 A1**
(43) Veröffentlichungstag der Anmeldung: **11.07.2001**
(21) Anmeldenummer: 00128474.4
(22) Anmeldetag: 23.12.2000
(51) Int. Cl.: B62B 1/18

(54) **Motorisierte Schubkarre**

(30) Priorität: 30.12.1999 DE 19963820
(71) Anmelder: Geisslinger, Peter, 86830 Schwabmünchen (DE); Klimm, Gerd, 86450 Neumünster (DE)
(72) Erfinder: Brabetz, Florian, 86316 Friedberg (DE); Geisslinger, Peter, 86830 Schwabmünchen (DE); Klimm, Gerd, 86450 Neumünster (DE)
(74) Vertreter: Gallo, Wolfgang, Dipl.-Ing. (FH)

(57) **Zusammenfassung**

Motorisierte Schubkarre, deren Rad (3) mit einem elektrischen Nabenmotor (4) ausgestattet ist, der aus einer Batterie gespeist wird, die in einem Batteriekasten (5) vorzugsweise an der Unterseite der Wanne (2) gespeist wird und über einen Steuerschalter (6) an einem der Holme (13) gesteuert wird.

## Beschreibung

Die Erfindung bezieht sich auf eine einrädrige Schubkarre, wie sie als Bau- und Gartenschubkarre verwendet wird, mit einer Wanne zur Aufnahme des zu transportierenden Materials, einem mittigen Rad, das unter dem vorderen Bereich der Wanne angeordnet ist, zwei rückwärtigen Holmen zum Ergreifen und Schieben der Schubkarre, und zwei unter dem rückwärtigen Wannenbereich angeordneten Stützen zum Abstellen der Schubkarre.

Das Transportieren von Material auf Baustellen oder in Gärten mit solchen Schubkarren ist oftmals mühsam und schwierig, insbesondere wenn das Material schwer ist, beispielsweise beim Transport von Steinen, Kies, Sand oder Erde, aber auch von Holz, Kompost und dgl. Häufig muß das Material mit der Schubkarre über ansteigende Rampen transportiert werden, beispielsweise auf Baustellen, wobei die Rampen oftmals nur aus einem provisorisch hingelegten Brett bestehen, oder über Steigungen oder Böschungen, insbesondere im Gartenbereich.

Das ist zum einen wegen des notwendigen Kraftaufwands mühsam und zum anderen schwierig, weil zusätzlich zur aufzubringenden Schubkraft die Balance gehalten werden muß, was gerade beim Fahren über schmale Rampen besonders schwierig ist, insbesondere für weniger geübte Personen im Heimwerker- und Gartenbereich.

Aufgabe der Erfindung ist es daher, eine Verbesserung im Sinne einer leichteren Handhabung solcher Schubkarren zu schaffen.

Es sind bereits einige Vorschläge für eine motorisierte Schubkarre bekannt. Diese Vorschläge sehen sämtlich Verbrennungsmotoren vor, die unter der Wanne angeordnet sind und das Schubkarrenrad über Reibräder oder Kettentriebe antreiben.

Diese bekannten Vorschläge leiden aber an erheblichen Mängeln, die ihre Praxistauglichkeit sehr in Frage stellen. Abgesehen davon, daß bei einer einrädrigen Schubkarre immer auch mit einem Umkippen gerechnet werden muß, so daß Verbrennungsmotoren wegen der Gefahr des Auslaufens von Öl und Kraftstoff problematisch sind, ist die Kraftübertragung über Reibräder, Kettentriebe oder dgl. schon deswegen fragwürdig, weil der Einsatzbereich handgeschobener Schubkarren auf Baustellen und in Gärten es mit sich bringt, daß sich Materialien, beispielsweise Zweige, Blätter, Papiersäcke und alles mögliche in den Antriebsorganen verfängt, den Betrieb stört und Beschädigungen hervorruft. Darüberhinaus besteht eine erhebliche Unfallgefahr durch derartige offenliegende Antriebe. Es ist daher nicht verwunderlich, daß die bekannten Vorschläge, soweit ersichtlich, bisher keinen Eingang in die Praxis gefunden haben.

Im besonderen liegt der Erfindung dehalb auf die Aufgabe zugrunde, eine praxistaugliche motorisierte Schubkarre zu schaffen, bei der weder die Gefahr besteht, daß der Betrieb durch in die Antriebsorgane gelangende Materialien gestört wird, noch eine Unfall- oder Verletzungsgefahr im Gebrauch besteht, also absolute Praxistauglichkeit gegeben ist.

Diese Aufgabe wird durch die im Anspruch 1 angegebene motorisierte Schubkarre gelöst.

Vorteilhafte Ausgestaltungen der Erfindung sind Gegenstand der Unteransprüche.

Die erfindungsgemäße motorisierte Schubkarre verfügt also über einen elektrischen Antrieb mit vorzugsweise unter der Wanne angeordneter Batterie, einem in oder an der Nabe des Schubkarrenrads eingebauten Elektromotor und einem an einem der Griffholme angeordneten Steuerorgan. Der gekapselte elektrische Nabenmotor treibt das Rad über dessen Nabe von innen her an indem das Rad selbst bzw. ein Teil von dessen Nabe den Läufer des Elektromotors darstellt bzw. mit diesem direkt verbunden ist, so daß zum einen ein Hineingreifen oder ein auch sonst irgendwie geartetes Hineingeraten meschlicher Körperteile in den Antrieb ebenso ausgeschlossen ist wie zum anderen ein Hineingeraten irgendwelcher auf Baustellen oder in Gartenbereichen zu findenden Materialien in den Antrieb. Weder besteht die Gefahr, daß beim Umkippen der Schubkarre Treibstoffe oder Motoröl auslaufen und den Boden verseuchen, noch besteht die Gefahr, daß der Benutzer sich an heißen Motor- oder Auspuffteilen Verbrennungen zuzieht, wie das bei Verbrennungsmotoren der Fall sein kann. Zudem ergibt sich eine gewichtsmäßig leichte Konstruktion, ein lärm- und abgasfreier Betrieb, und durch Verwendung wiederaufladbarer und mit einfachen Steckverbindungen einzusetzender Batterien eine hervorragende Verfügbarkeit.

Ein Ausführungsbeispiel der Erfindung ist in der anliegenden schematischen Zeichnung dargestellt und wird im folgenden kurz beschrieben.

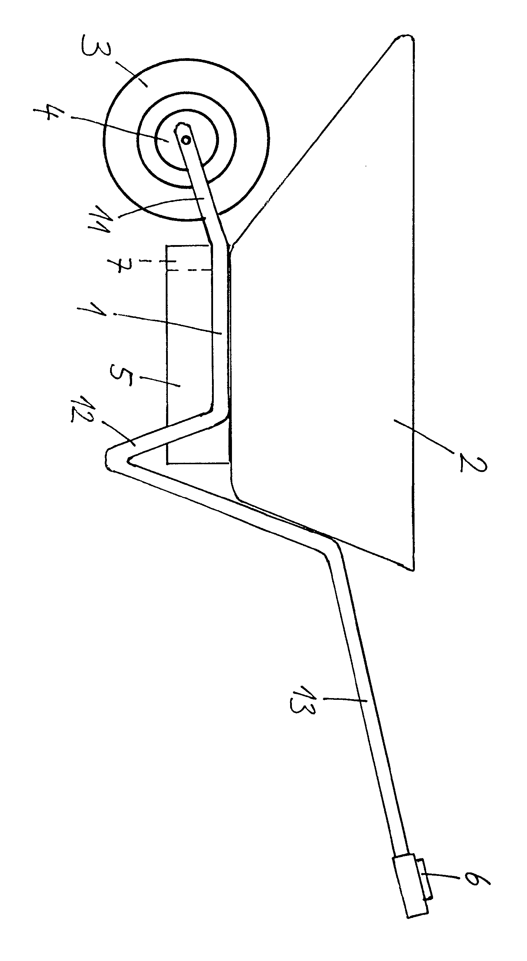

Die Zeichnung zeigt eine Schubkarre nach der Erfindung mit einem Rahmen 1, einer Wanne 2, und einem Rad 3. Der Rahmen 1 weist vorne eine Radgabel 11, an welcher das Rad 3 montiert ist, unter dem hinteren Wannenbereich Stützen 12 zum Abstellen und hinten zwei Holme 13 auf. Die Wanne 2 kann in üblicher Weise aus Metallblech, aber ebenso gut auch aus Kunststoff hergestellt sein.

In das Rad 3 ist ein elektrischer Nabenmotor 4 eingebaut oder an die Nabe angebaut, dessen Gehäuse bzw. Statorteil mit der Radgabel 11 verbunden ist, zumindest über eine Drehmomentstütze, und dessen Läufer mit dem Rad verbunden ist.

Vorzugsweise an der Unterseite der Wanne 2 ist ein Batteriekasten 5 zur Aufnahme einer Batterie angebaut, aus welcher der Nabenmotor 4 gespeist wird. Die Batterie ist vorzugsweise als flacher Batterieblock ausgeführt, der eine entsprechende Breite, aber nur eine geringe Bauhöhe hat. Die Batterie ist vorzugsweise über eine Steckverbindung leicht auswechselbar in den Batteriekasten 5 eingesetzt. Außerdem ist der Batteriekasten vorzugsweise mit einem Ladesteckverbinder versehen.

An einem der Holme 13 ist ein handbetätigbarer Steuerschalter 6 angeordnet. Dieser ist über ein Steuerkabel (nicht dargestellt) mit dem Batteriekasten 5 verbunden, in welchem auch die Steuerschaltung untergebracht sein kann, und der wiederum über ein Speisekabel mit dem Nabenmotor 4 verbunden ist.

Im bzw. am Batteriekasten 5 kann auch ein Elektronikblock 7 eingebaut sein, mit welchem der schon erwähnte Ladesteckverbinder verbunden ist und der das Laden der Batterie im Batteriekasten regelt, und der auch bei schiebendem Nabenmotor 4, wenn dieser als Generator wirkt, dies automatisch zum Laden der Batterie nutzt oder gewünschtenfalls durch Zuschalten eines Widerstands oder eine ähnliche Maßnahme eine Bremswirkung erzeugt, um das Abwärtsfahren auf Gefällestrecken mit der Schubkarre zu erleichtern. Die Anordnung kann so getroffen sein, daß entweder automatisch auf Bremsen geschaltet wird, wenn bei schiebendem Nabenmotor ein bestimmter Schwellenwert überschritten wird oder daß am Steuerschalter ein entsprechendes Bedienelement vorgesehen ist, um die Bremse einzuschalten.

## Patentansprüche

1. Schubkarre mit einem Rahmen (1), der eine Radgabel (11), Stützen (12) und Holme (13) aufweist, einer Wanne (2) und einem Rad (3), dadurch gekennzeichnet, daß in das Rad ein elektrischer Nabenmotor (4) ein- oder angebaut ist, der aus einer elektrischen Batterie gespeist wird, die in einem am Rahmen oder an der Wanne angebauten Batteriekasten (5) untergebracht ist, und daß an einem der Holme (13) ein Steuerschalter (6) angeordnet ist, über welchem die Stromzufuhr von Batterie zum Nabenmotor (4) steuerbar ist.

2. Schubkarre nach Anspruch 1, wobei der Batteriekasten (5) an der Unterseite der Wanne angebaut ist.

3. Schubkarre nach Anspruch 1 oder 2, wobei die Batterie herausnehmbar und über eine Steckverbindung kuppelbar im Batteriekasten (5) angeordnet ist.

4. Schubkarre nach einem der Ansprüche 1 bis 3, wobei die Batterie in Flachbauweise ausgeführt ist und der Batteriekasten (5) als entsprechend flacher Kasten mit niedriger Bauhöhe ausgebildet ist.

5. Schubkarre nach einem der Ansprüche 1 bis 4, wobei im oder am Batteriekasten ein Elektronikblock (7) ein- bzw. angebaut ist, der einen Ladestecker zum Aufladen der Batterie im Batteriekasten (5) aufweist.

6. Schubkarre nach Anspruch 5, wobei der Elektronikblock (7) eine Schaltung aufweist, die bei schiebender Schubkarre und als Generator wirkendem Nabenmotor (4) erzeugten Strom zur Ladung der Batterie in diese zurückspeist.

7. Schubkarre nach Anspruch 5 oder 6, wobei der Elektronikblock (7) eine Bremsschaltung enthält, die über ein Steuerelement am Steuerschalter aktivierbar ist.

8. Schukarre nach Anspruch 5 oder 6, wobei der Elektronikblock (7) eine Steuerschaltung enthält, die bei schiebender Schubkarre und oberhalb eines voreingestellten oder einstellbaren Schwellenwerts als Generator wirkendem Nabenmotor (4) eine automatische elektrische Bremsung des Rads (3) erzeugt.
